# EUROPEAN PATENT SPECIFICATION

(11) **EP 3 295 070 B1**
(45) Date of publication and mention of the grant of the patent: **11.09.2019**
(21) Application number: 16726933.1
(22) Date of filing: 14.03.2016
(51) Int. Cl.: F16L 17/06, F16L 27/08, F16L 17/10

(54) **JOINT FOR SUBMARINE CONNECTIONS**
VERBINDUNG FÜR UNTERWASSERANSCHLÜSSE
JOINT POUR RACCORDS SOUS-MARINS

(30) Priority: 14.05.2015 IT VI20150120
(43) Date of publication of application: 21.03.2018
(73) Proprietor: De Pretto Industrie S.r.l., 36015 Schio (VI) (IT)
(72) Inventor: RUARO, Enrico, 36031 Dueville - Povolaro (VI) (IT); DAI ZOTTI, Andrea, 36031 Dueville (VI) (IT)
(74) Representative: Ziliotto, Tiziano
(86) International application number: PCT/IB2016/051440
(87) International publication number: WO 2016/181232

(56) References cited:
- WO-A1-2015/118265
- GB-A- 742 555
- GB-A- 2 468 931
- US-A- 4 626 003
- US-A- 6 161 834
- US-A1- 2012 187 675

## Description

### STATE OF THE ART

The present invention concerns the field of pipes and/or ducts. In particular, the present invention concerns the field of submarine pipes. In greater detail, the present invention concerns a solution suited to make it easier to install and/or lay pipes and/or ducts of the above mentioned type. In even greater detail, the subject of the present invention is a solution intended to overcome the drawbacks and/or problems that occur when pipes and/or ducts of the above mentioned type are installed and/or laid according to the procedures commonly adopted in the known art. Finally, the subject of the present invention includes a coupling for pipes of the above mentioned type that makes it possible to overcome the drawbacks and/or problems that occur when the same pipes and/or ducts are installed and/or laid according to the procedures known in the art.

### DESCRIPTION OF THE STATE OF THE ART

Several methods for installing and/or laying pipes and/or ducts, in particular submarine pipes and/or ducts, are known in the art. According to one of said methods, a flexible pipe having the desired cross section is unwound from a reel positioned on a ship and than laid on the sea bottom. First of all, it should be underlined that intermediate pipe fittings are used for laying the pipe, said pipe fittings being interposed between successive pipe portions having a predefined length. Said intermediate pipe fittings have multiple and different purposes, among which, for example, the purpose of firmly anchoring the pipe to the sea bottom (thanks to their weight, for example), as well as the purpose of branching off, in particular of connecting possible secondary or branch pipes to the main pipe or duct. Obviously, each one of the pipe fittings used must guarantee the passage of a fluid inside it (for example gas, oil or similar fluids), as well as the tightness of the connection with the two portions of the pipe or duct respectively located upstream and downstream of the pipe fitting, in order to avoid fluid leakages from the inside of the pipe towards the outside and/or the infiltration of external agents, in particular of sea water.

According to the latest techniques, the pipe fittings are connected to the main pipe before being laid or placed on the sea bottom, which means that each pipe fitting is connected to the pipe portion that was previously laid and to the successive pipe portion that is still on the ship or vessel. However, this type of use and/or connection of the pipe fittings gives rise to further problems that are still, if not completely, at least partially unsolved. In fact, it should be noted that during the laying operations the pipe, especially if unwound from a reel, is subjected to considerable twisting forces that, if they are not compensated for, may affect the positioning of the pipe and/or of the pipe fittings; for example, the pipe fittings may not be laid on the sea bottom in an optimal way (thus negatively affecting the stability of the pipe) and/or the pipe may be subject to breakages.

In order to at least partially overcome the drawbacks summed up above, the operators working in this sector have developed a tendency to use rotatable couplings to connect the pipe fittings to the pipe portions respectively located upstream and downstream of each pipe fitting; the use of revolving pipe fittings allows the pipe, if subjected to twisting forces, to rotate substantially around its longitudinal axis, independently of (released from) the pipe fitting which therefore can be positioned in an optimal manner even if the pipe is subjected to a twisting force.

These solutions also give rise to the problem of guaranteeing the tightness of the couplings which usually comprise a first element intended to be fixed to the pipe fitting and a second element intended to be fixed to the pipe, said second element being coupled with the first element in a rotating manner. The problem that arises is thus evident, as on one side it is necessary to guarantee the mutual rotation of the two elements of the coupling and on the other side it is necessary to guarantee the tightness of the connection between the two elements of the coupling. According to other solutions known in the art, sealing elements are used (interposed between the two elements of the coupling) that can be activated once the coupling and/or the corresponding pipe fitting has been laid; in practice, during the pipe laying procedure the sealing elements are shaped in such a way that they do not necessarily guarantee tightness, but that they at least allow the rotation of the elements of the coupling (so as to compensate for the twisting forces to which the pipe may be subjected), wherein, once the pipe laying procedure has been completed, the sealing elements are switched to a second configuration intended to guarantee the tightness of the connection between the elements of the coupling and possibly also to prevent their mutual rotation. These solutions also include the use of submarine robots for switching the sealing elements from the non-sealing to the sealing configuration, and are therefore particularly difficult, especially in consideration of the fact that in some cases the pipes are laid down to depths that may even reach 3500 m. Said operations, therefore, are particularly demanding and very expensive.

On the other hand, in most cases the solutions known in the art, according to which the sealing elements of the couplings are switched to the sealing configuration before laying the pipe, do not guarantee the mutual rotation of the elements of the coupling, and therefore do not make it possible to properly compensate for the twisting forces to which the pipe is subjected.

The main object of the present invention is thus to solve or at least partially overcome the problems that characterize the solutions known in the art.

In particular, it is a further object of the present invention to provide an innovative solution in relation to the production of a connection coupling suited to be interposed, depending on the circumstances and/or the needs, both between two successive pipe portions and between a pipe fitting and a pipe portion, wherein said connection coupling should guarantee both the tightness of the connection between the two elements of the coupling and the mutual rotation of the elements of the coupling. It is a further object of the present invention to provide an innovative solution that makes it possible to produce a coupling of the type that does not require any operations (in particular, submarine operations) for switching the sealing elements to the sealing or non-sealing configuration. Finally, it is another object of the present invention to provide a connection coupling of the type described above that can be produced and installed with simple procedures and/or operations and at limited cost.

Rotatable couplings are known, for instance, from documents US 2012/187675, US 4,626,003, GB 742,555 and GB 2468931.

In document US 2012/187675, a fluid handling swivel joint includes a first flanged portion and a tail portion that form a conduit. The swivel joint also includes a body secured to the first flanged portion and at least partially surrounding the tail portion, where the body and the tail portion form a raceway. The swivel joint further includes a primary seal positioned between the first flanged portion and the tail portion, and a secondary seal positioned between the first flanged portion and the tail portion and radially outward of the primary seal.

### SUMMARY OF THE PRESENT INVENTION

The present invention is defined by a rotatable coupling according to claim 1. The present invention is based on the general consideration according to which the problems found in the art can be at least partially overcome by means of a rotatable coupling for pipes made using sealing elements interposed between the mutually revolving parts of the coupling itself and suited to guarantee a degree of tightness that is proportional to the pressure to which they are subjected, in particular due to a fluid that exerts pressure on them. In other words, according to the present invention the sealing elements must be suited to be automatically switched between a configuration of minimum tightness (and minimum contact with the revolving elements of the coupling, in which the mutual rotation between the elements of the pipe and at least a minimum degree of tightness arc guaranteed) and a configuration of increased tightness (with increased contact with the revolving elements of the coupling, in which tightness is guaranteed and leakages and/or infiltrations are prevented) in particular through the exploitation of the pressure exerted on them by a fluid. In particular, according to a further consideration on which the present invention is based, the sealing elements will assume the configuration of maximum tightness by exploiting the pressure exerted on them by a fluid outside the coupling (to avoid infiltrations of the fluid from the outside towards the inside of the coupling) and/or by the fluid inside the pipe (avoiding fluid leakages and/or losses from the inside towards the outside).

It has been considered, in fact, that the spontaneous and/or automatic switch-over of the sealing elements according to the procedures summed up above first of all makes it possible to install the coupling out of sea (for example, on board a ship) and at the same time guarantees the mutual rotation between the revolving parts of the coupling, thus making it possible to properly compensate for the twisting forces to which the pipe is inevitably subjected (and therefore to conveniently position the pipe fittings and/or the pipe), as well as perfect tightness of the connection between the revolving parts of the coupling once the pipe has been laid, in particular with no need to intervene on the coupling and/or on its sealing elements with submarine operations or in any case operations performed once the pipe has been laid.

Based on the considerations summed up above, according to a first embodiment of the present invention the subject of the same is a rotatable coupling for connecting pipes, said coupling comprising a first hollow female element suited to be connected, for example, to a first pipe portion or to a pipe fitting and a second tubular male element with a first end portion at least partially housed inside said first female element in such a way as to define a common inner space for the passage of a fluid, and a second end portion suited to be connected to a second pipe portion, said first element and said second element being suited to be rotated with respect to each other and respectively comprising a first abutment surface and a second abutment surface adjacent to said first abutment surface, at least one first elastic annular sealing element being interposed between said first and said second abutment surface, wherein said first abutment surface and said second abutment surface are placed at a mutual distance from each other in such a way as to define an interspace, and wherein the surface areas of the portions of the external surface of said elastic sealing element respectively in contact with said first and said second abutment surface are minimal if no fluid is present and increase when said elastic sealing element is subjected to pressure by a fluid flowing inside said interspace.

According to an embodiment of the invention, said first abutment surface and said second abutment surface are of the annulus-shaped type and substantially perpendicular to the direction of longitudinal extension of said second tubular male element.

According to the invention, said first annular sealing element is hollow, with open cross section, and is provided with an opening or a slit that places the inner space delimited by said first annular sealing element in communication with the space outside said first annular sealing element. Advantageously, according to a sectional view, said first annular sealing element comprises two portions arranged in such a way as to define or enclose an inner angle and connected by a connecting portion, the external surfaces of each one of said two portions arranged so as to form an angle being respectively in contact with said first and said second abutment surface.

Still advantageously, each one of said two portions arranged so as to form an angle comprises a rectilinear subportion extending from said connecting portion and a curved end portion, said two curved end portions being opposite each other in such a way as to delimit said opening or slit.

Preferably, one of said first and second end portions respectively of said first female element and of said second male element comprises a first annular groove or lowered portion that extends from the respective abutment surface, wherein said first annular sealing element is at least partially housed inside said first annular groove.

Still preferably, said first groove is in contact with the inner space mutually defined by said first hollow female element and by said second tubular male element through said interspace and/or said opening or slit faces towards the inner space defined by said second tubular male element.

According to an embodiment, at least one second annular elastic sealing element is interposed between said first abutment surface and said second abutment surface, wherein the surface areas of the external surface of said elastic sealing element in contact respectively with said first abutment surface and said second abutment surface are minimal if no fluid is present and increase when said elastic sealing element is subjected to pressure by a fluid flowing inside said interspace. Advantageously, said second annular sealing element is hollow, with open cross section, and is provided with an opening or a slit that places the inner space delimited by said second annular sealing element in communication with the space outside said second annular sealing element.

Still advantageously, according to a sectional view, said second annular sealing element comprises two portions arranged in such a way as to define or enclose an inner angle and connected by a connecting portion, the external surfaces of each one of said two portions arranged so as to form an angle being respectively in contact with said first and said second abutment surface.

Preferably, each one of said two portions arranged so as to form an angle comprises a rectilinear subportion extending from said connecting portion and a curved end portion, said two curved end portions being opposite each other in such a way as to delimit said opening or slit.

Still preferably, one of said first and second end portions respectively of said first female element and of said second male element comprises a second annular groove or lowered portion that extends from the respective abutment surface, wherein said second annular sealing element is at least partially housed inside said second annular groove.

If necessary, said second groove can be in contact with the inner space mutually defined by said first hollow female element and said second tubular male element through said interspace and/or said opening or slit can face towards the inner space defined by said second tubular male element and/or said second groove can be in contact with the space outside said coupling through said interspace and/or said opening or slit of said second annular elastic element can face towards the space outside said coupling.

Further embodiments of the present invention are described in detail in the claims.

### BRIEF DESCRIPTION OF THE DRAWINGS

Further advantages, objects and characteristics of the present invention are defined in the claims and will be illustrated below in the following description of the embodiments of the invention illustrated in the enclosed drawings, in which equivalent or corresponding characteristics and/or component parts of the present invention are identified by the same reference numbers. In particular:
- Figure 1 shows the methods for laying and/or installing a pipe, in particular a submarine pipe or duct;
- Figure 2 shows a perspective view of a rotatable coupling according to an embodiment of the present invention, the coupling being interposed between a pipe fitting and a portion of a pipe or duct;
- Figure 3 shows an exploded view of a rotatable coupling according to an embodiment of the present invention;
- Figure 4 shows a longitudinal sectional view of a rotatable coupling according to an embodiment of the present invention;
- Figure 5 shows a sectional view of a detail of the rotatable coupling according to an embodiment of the present invention;
- Figures 6 and 7 show each a sectional view of further details of the rotatable coupling according to an embodiment of the present invention;
- Figure 8 shows a perspective and partially sectional view of an elastic element according to an embodiment.

### DETAILED DESCRIPTION OF THE PRESENT INVENTION

Although the present invention is described below with reference to its embodiments illustrated in the drawings, the present invention is not limited to the embodiments described below and illustrated in the drawings. On the contrary, the embodiments described below and illustrated in the drawings clarify some aspects of the present invention, the scope of which is defined in the claims.

The present invention can be advantageously employed in particular, but not exclusively, in the field of pipe and/or duct laying procedures. In particular, the present invention can be advantageously employed when used for installing and/or laying submarine pipes and/or ducts. This is the reason why the present invention is illustrated and described here below with special reference to its possible applications in the field of laying and/or installation procedures for submarine pipes and/or ducts. The possible applications of the presente invention, however, are not limited to the installation and/or laying of submarine pipes and/or ducts; on the contrary, the present invention can also be advantageously applied in all those situations in which it is necessary to connect two portions of any pipe, wherein the connection must guarantee both tightness between the mutually connected parts and the mutual rotation of the parts themselves.

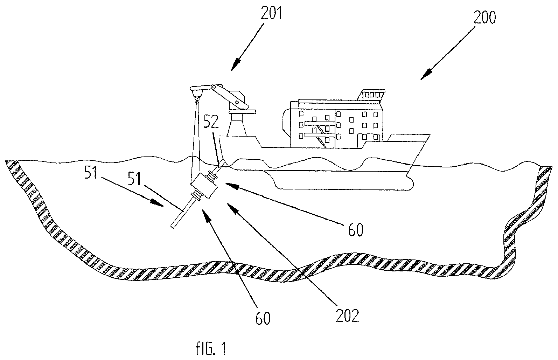

The methods and/or main operations for installing and/or laying a submarine pipe and/or duct are concisely described here below, with reference to Figure 1.

Figure 1 shows a ship or vessel indicated by the reference number 200 and provided with a crane 201. As explained above, according to the latest techniques for installing and/or laying submarine pipes and/or ducts, pipe fittings 202 (one of which is shown in the figure) are connected to the main pipe before being laid on the sea bottom; in particular, as shown in the figure, the pipe fitting 202 is connected to the previously laid pipe portion 51 and to the successive portion 52 that is still on the ship or vessel, for example wound on a reel (not illustrated in the figure). According to the present invention, two rotatable couplings 50 are used to connect the pipe fitting to the pipe portions 51 and 52, said rotatable couplings 50 being respectively interposed between the portion 51 and the pipe fitting 202 and between the pipe fitting 202 and the portion 52. The connection of the rotatable couplings is performed on board the ship according to essentially known procedures, after which the pipe fitting 202 is positioned on the sea bottom with the aid of the crane, wherein while the pipe fitting 202 is being laid the pipe portion 52 is further unwound from the reel.

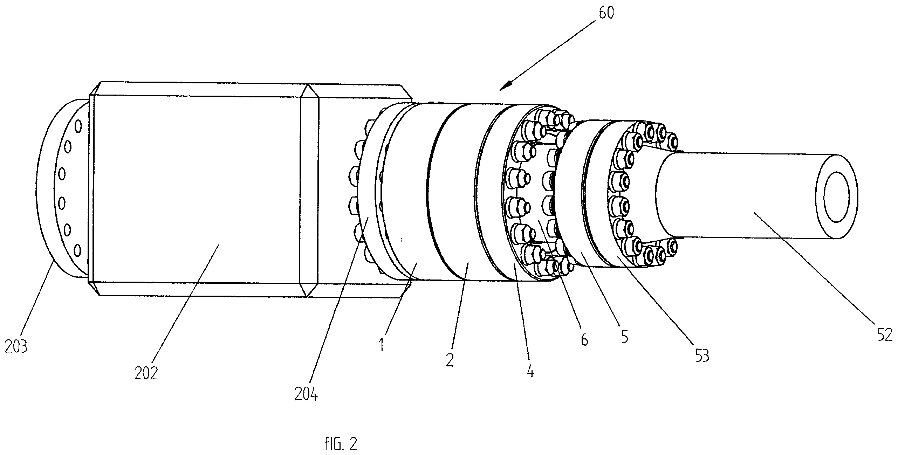

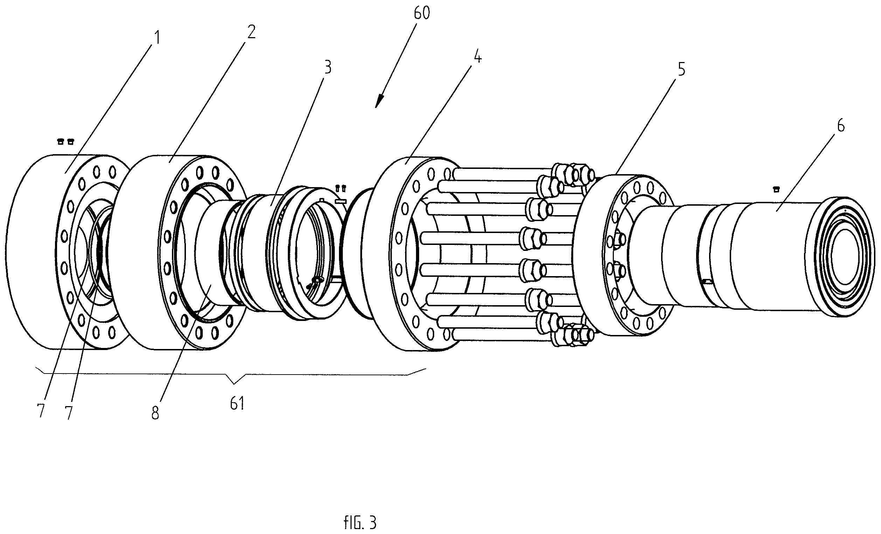

The main component parts of a rotatable coupling according to an embodiment of the present invention are described here below with reference to Figures 2 and 3. As shown in the figures, the pipe fitting 202 comprises a hollow box-shaped main body suited to allow the passage of a fluid and therefore to be interposed between and connected to two successive pipe portions (a portion 52 being represented in Figure 2). For this purpose, on two opposite sides, the pipe fitting 202 respectively comprises two connection flanges 203 and 204, each suited to be connected to and/or coupled with a rotatable coupling 60 according to the present invention (only one rotatable coupling being shown in Figure 2, in particular interposed between the pipe fitting 202 and the pipe 52). Obviously, if the pipe fitting 202 needs to be used as a branch connection, it may comprise further flanges (not illustrated in Figure 2) that are suited, in fact, to allow its connection to branch pipes, with or even without rotatable couplings.

With special reference to Figure 3, it can be deduced that the coupling 60 according to the embodiment of the present invention represented therein comprises three annular elements or flanges 1, 2 and 4 (wherein, furthermore, the number and thickness of the flanges can vary according to the needs and/or circumstances), mutually connected by means of threaded bars in such a way as to form a hollow element 61, wherein the hollow female element 61 is fixed to the connection flange 204 of the pipe fitting 202 by means of the threaded bars. A further tubular male element 6 is revolvingly housed inside the hollow element 61, said tubular male element 6 being suited to be coupled with the pipe portion 52 through two further flanges 5 and 53 (mutually coupled through a further plurality of threaded bars or bolts). Thus, since the tubular male element 6 is rigidly fixed to the pipe 52 through the two flanges 5 and 53, and furthermore the hollow female element 61 is rigidly fixed to the pipe fitting 202, and finally the tubular male element 6 is revolvingly housed in the hollow element 61, it can be understood that the pipe 52 is revolvingly coupled with the pipe fitting 202 through the rotatable coupling 60, so that any twisting forces acting on the pipe during the installation or laying procedure are adequately compensated for.

The component parts 1, 2 and 4 of the hollow female element 61 and the tubular male element 6 are shaped in such a way that when said flanges and the tubular male element 6 are mounted according to a predefined sequence, the tubular male element 6 cannot be released from the hollow element 61, in particular it cannot move out of the hollow element 61. The procedure for the installation of the rotatable coupling 60, in particular the succession according to which the flanges 1, 2 and 4 and the tubular element 6 are mutually coupled and/or fixed to the pipe fitting 202, do not necessarily fall within the scope of the present invention and therefore the detailed description of this procedure is omitted for the sake of brevity.

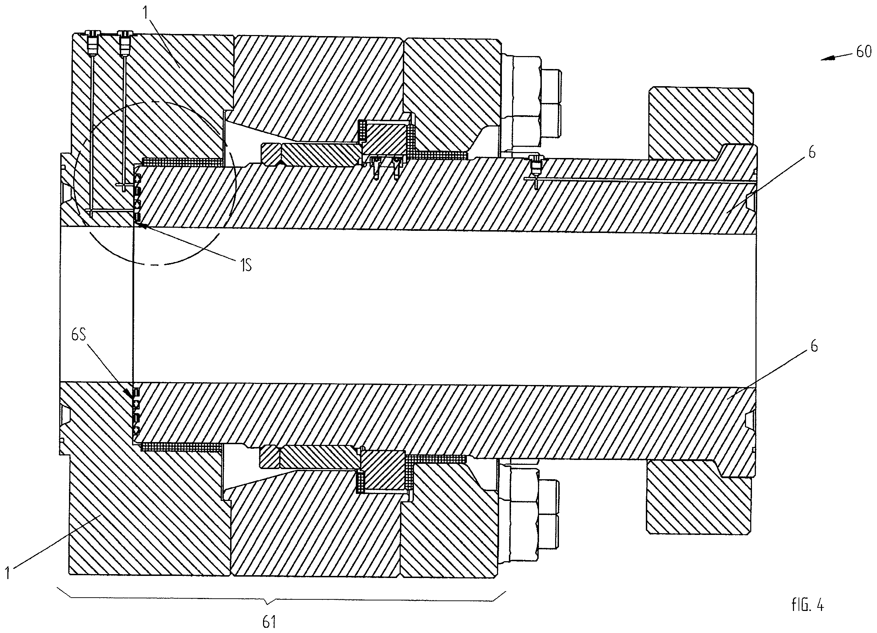

Further component parts and/or characteristics of the rotatable coupling 60 according to the present invention are described here below with particular reference to Figure 4.

As shown in Figure 4, the coupling 60 represented therein comprises a plurality of means suited to facilitate the mutual rotation of the hollow female element 61 and of the tubular male element 6; said means, represented through dots and positioned where it is necessary and/or convenient to reduce friction between the male element 6 and the hollow body 61, and comprising for example one or more bushings 12, 8 (or even bearings or similar elements) interposed between the external surface of the tubular male element 6 and the inner surface of the hollow female body 61, and/or in any case between the adjacent surfaces of the hollow element 61 and of the tubular element 6, wherein the opposition between the surfaces may generate such friction as to affect the mutual rotation of the hollow element 61 and the tubular element 6.

Always with reference to Figure 4, it can be understood that in order to guarantee tightness (and therefore to avoid fluid leakages and/or infiltrations of external agents, annular grooves extend from the surface of the flange 1 intended to mesh with the flange 204 of the pipe fitting 202, said annular grooves being suited to accommodate the same number of sealing elements such as, for example, O rings or similar elements; the same applies to the surface (on the right in Figure 4) of the tubular element 6 intended to be engaged with the pipe 52, wherein also said surface is provided with annular grooves, each one of which is suited to accommodate a sealing element like an O ring or a similar element.

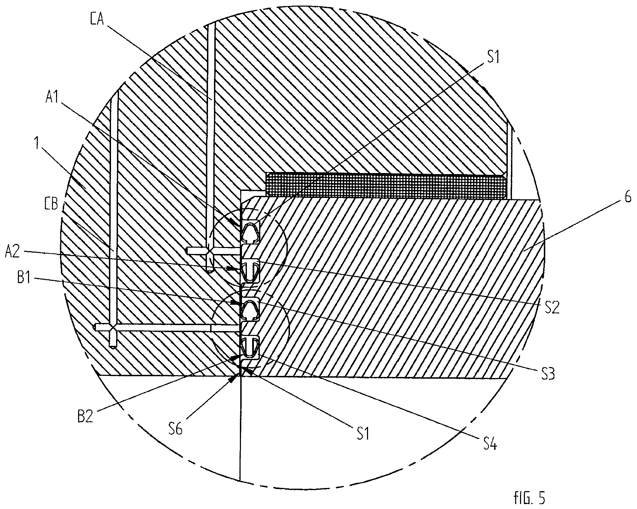

Finally, further sealing elements are arranged between the surface 6S of the tubular male element 6 and the surface 1S of the flange 1 (or of the hollow element 61) opposite the surface 6S, said further sealing elements being used for the purpose of guaranteeing the mutual tightness of the connection between the female element 61 and the male element 6 (and therefore of the coupling 60), thus avoiding losses and/or leakages of fluid from the inside towards the outside, as well as infiltrations of external agents (for example, sea water). Said further sealing elements are described here below with special reference to Figures 5, 6 and 7.

First of all, it is useful to notice that, as can be seen in the figures, the opposing surfaces 6S and 1S, respectively of the tubular male element 6 and of the hollow female element 61, are placed at a predefined, even if minimal, distance from each other, and thus delimit an interspace I. Furthermore, the tubular male element 6 comprises four concentric annular grooves S1, S2, S3 and S4 that extend from the surface 6S down to a predefined depth; obviously in the present invention the grooves S1, S2, S3 and S4 may alternatively be formed in the hollow element 61, so as to extend from the surface 1S. In each one of the grooves S1, S2, S3 and S4, furthermore, there is an annular elastic sealing element made, for example, of metal or of an equivalent elastic material; in particular, a sealing element A1 is housed in the groove S1, a sealing element A2 is housed in the groove S2, a sealing element B1 is housed in the groove S3, a sealing element B2 is finally housed in the groove S4. As is clearly explained in the following description, the sealing elements B1 and B2, in particular the sealing element B1, have the purpose to prevent any leakages and/or losses of fluid (for example, gas, oil, diesel oil or similar fluids), while the sealing elements A1 and A2, in particular the sealing element A2, have the purpose to avoid infiltrations from the outside, for example infiltrations of sea water and/or corrosive agents.

Since the sealing elements A1, A2, B1 and B2 are shaped in a substantially similar manner, one of said sealing elements is described here below, in particular the sealing element B1 housed in the annular groove S3.

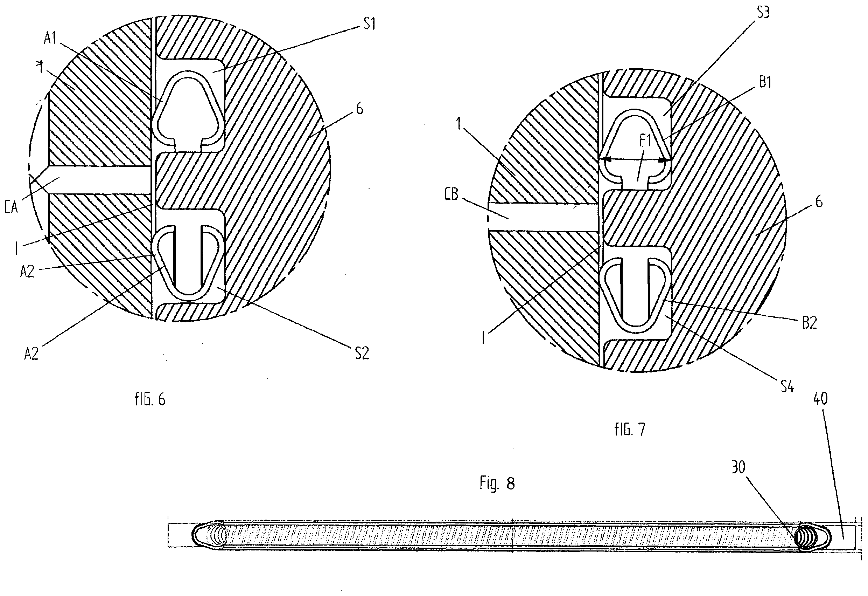

Figure 7 shows, in particular, that the sealing element B1 has "open" cross section (perpendicular to its annular development), in particular with an opening or slit F1 that extends over the entire circumference of the ring or annular element B1. This means that, according to a sectional view, for example that shown in Figure 7, the element B1 comprises two opposite portions (for example rectilinear, as in the example shown in the figure) connected by a curved connecting portion, wherein each one of the two opposite portions comprises an end portion opposite the connecting portion and also curved, the two opposite and curved end portions thus being placed at a predefined distance from each other in such a way as to define and delimit the slit F1. It can thus be understood that the element B1, being elastic, is suited to be deformed along a direction indicated by the arrows in the figure, in particular in the two opposite directions indicated by the arrows; this means that the element B1 is suited to be "compressed" against the resistance generated by its elasticity (wherein, when the element B1 is compressed the width of the slit F1 decreases and the opposite end portions move near each other) and to be extended thanks to its elasticity, wherein during the extension the slit F1 becomes wider and the distance between the opposite end portions increases.

Furthermore, the element B1 is housed in the groove S3 in such a way as to come into contact with both the tubular element 6 and the hollow body 61 (the flange 1), in particular in such a way as to come into contact with the two opposite surfaces 6S and 1S, respectively of the element 6 and of the element 61 (of the flange 1). It can thus be understood that in this way the element B1 closes the interspace I, thus preventing any fluid leakages from the inside of the coupling 60 through the interspace I. It should also be noted that the slit F1 faces towards the inner space of the coupling 60; in this way, the fluid flowing from the inside of the coupling along the interspace I will be conveyed into the element B1, which will thus be deformed, that is, extended, wherein the contact areas between the external surface of the element B1 and the surfaces 6S and 1S will increase. This means, therefore, that, exploiting the pressure of a fluid in the interspace I, the element B1 can be naturally and automatically switched between the configuration shown in Figure 7, in which the contact between the element B1 and the surfaces 6S and 1S is minimal (and thus also the thrusting action exerted by the element B1 against the surfaces 6S and 1S is minimal) and a configuration of increased contact and tightness (not represented in the figures) in which, compared to the configuration shown in Figure 7, the contact between the element B1 and the surfaces 6S and 1S is increased (and also the thrusting action exerted by the element B1 against the surfaces 6S and 1S, and therefore the tightness, is increased).

Having thus described the characteristics of the sealing element B 1, substantially common to the other sealing elements B2, A1 and A2, it should be noted that, as shown in the figures, the sealing element B2, whose diameter is smaller than the diameter of the element B1, is concentric with the element B1 and therefore internal to the element B1, wherein, however, the slit of the element B2 is opposite the slit F1 of the element B1 and thus faces towards the outside of the coupling 60. In the same way, the sealing elements A1 and A2 are concentric, wherein the external element A1 has its slit facing towards the inside of the coupling 60, while the element A2 has its slit facing towards the outside of the coupling 60.

Finally, it should be noted that the two grooves S1 and S2 are in communication with the outside of the coupling 60 through a duct CA that extends from the interspace I to the external surface of the hollow element 61 (in particular, of the flange 1); in the same way, the two grooves S3 and S4 are in communication with the outside of the coupling 60 through a duct CB that extends from the interspace I to the external surface of the hollow element 61 (in particular, of the flange 1).

The methods for using the coupling 60 according to the present invention are summed up here below.

At the moment of installation of the coupling 60, in particular when the coupling 60 is respectively connected to the pipe fitting 202 and to the pipe portion 52, the coupling is in the configuration of minimal contact illustrated in Figure 7; in this configuration, notwithstanding the contact between the sealing elements A1, A2, B1 and B2 and the elements 6 and 1 (in particular the respective surfaces 6S and 1S), the hollow element 61 and the tubular element 6 are free to rotate with respect to each other thanks to the presence of the interspace I and to the fact that the resistance exerted by the sealing elements is minimal. The pipe can thus be laid and any twisting force exerted on the pipe can be compensated for thanks to the free mutual rotation of the elements 61 and 6 of the coupling 60, and thus between the pipe 52 and the pipe fitting 202. However, before proceeding to actually installing and/or laying the pipe, the operation of the sealing elements A1, A2, B1 and B2 is properly tested, wherein for this purpose a pressurized fluid (usually air) is introduced in the grooves S1, S2, S3 and S4 through the ducts CA and CB and the interspace I. In this way, the sealing elements are switched over automatically, meaning that, according to the methods described above, they are further pressed against the elements 61 and 6. In this way, the fluid introduced in the duct CA cannot flow towards the outside of the coupling and towards the inside of the coupling due to the presence of the element A1 and the element A2, respectively. In the same way, the fluid introduced in the duct CB cannot flow towards the outside and towards the inside of the coupling due to the presence of the sealing elements B1 and B2, respectively. Thus, in the absence of fluid leakages the correct operation of the sealing elements and their conformity are confirmed, while in the presence of fluid leakages the coupling is readjusted (for example, the elements 61 and 6 are further moved near each other in such a way as to reduce the interspace I) and/or the sealing elements are adjusted and/or replaced. Once the verification or testing step previously described has been completed, the pipe is actually laid and in this further step the pipe fitting 202 is laid on the sea bottom.

At this point, the description provided above shows that the coupling will guarantee the desired tightness, with no need for further operations to be performed on the coupling itself, in particular on the sealing elements (for example using submarine robots or similar means). In fact, any infiltrations of sea water from the outside will switch the configuration of the elastic element A2, while any fluid losses or leakages from the inside of the coupling towards the outside will switch the configuration of the elastic element B1.

Figure 8 shows a possible further embodiment of the sealing elements that can be used in the coupling according to the present invention. According to this embodiment, a helical spring 30 is housed (at least partially) in the inner space defined by the opposite portions (tines) of the switching element, while the connecting portion is housed in a seat in a corresponding shape obtained in an annular housing element 40. This solution makes it possible to increase the resistance of the sealing element to pressure and to improve its elastic memory (response to deformation/pressure).

It has thus been shown, by means of the previous detailed description of the embodiments of the coupling according to the present invention illustrated in the drawings, that the coupling according to the present invention makes it possible to achieve the set objects and to overcome the drawbacks that are typical of the couplings known in the art. In particular, the present invention makes it possible to provide a rotatable coupling that guarantees both the tightness of the connection between the two elements of the coupling and the free mutual rotation of the elements of the coupling. Furthermore, the coupling according to the present invention does not require any operation (in particular, submarine operations) for switching the configuration of the sealing elements. Furthermore, the coupling according to the present invention can be made and installed with simple methods and/or procedures and at limited cost. It should finally be noticed that the special geometric layout of the sealing elements (S1, S2, S3 e S4) allows the coupling of the invention, and in particular each one of the couplings described above, to guarantee tightness even in the case where the external pressure (for example, due to sea water) exceeds the internal pressure.

While the present invention has been described with reference to the particular embodiments shown in the figures, it should be noted that the present invention is not limited to the specific embodiments illustrated and described herein; on the contrary, further variants of the embodiments described herein fall within the scope of the present invention. For example, in the present invention the number of sealing elements may vary and be selected according to the needs and/or circumstances; in particular, the sealing elements A1 and B2 essentially used during the testing operations can also be omitted. The scope of the present invention is thus defined in the claims.

## Claims

1. Rotatable coupling (60) for connecting pipes, said coupling comprising
a first hollow female element (61) suited to be connected, for instance, to a first portion (51) of a pipe or to a pipe fitting (202) and
a second tubular male element (6) with a first end portion at least partially housed inside said first female element (61) so as to define an inner common space through which a fluid can flow, and with a second end portion suited to be connected to a second portion (52) of a pipe,
said first and said second element (61, 6) being suited to be rotated with respect to each other and respectively comprising a first abutment surface (1S) and a second abutment surface (6S) adjacent to said first abutment surface (IS), **wherein** said first and said second abutment surface (1S, 6S) are arranged at a predefined mutual distance from each other so as to define an interspace (I),
at least one first elastic annular sealing element (B1) and one second elastic annular sealing element (B2) being interposed between said first and said second abutment surface (1S, 6S),
**wherein** the surface areas of the portions of the external surface of said first elastic annular sealing element (B1) in contact respectively with said first and said second abutment surface (1S, 6S) are minimal in the absence of a fluid and increase when said first elastic annular sealing element (B1) is subjected to pressure exerted by a fluid inside said interspace (I),
**wherein** the surface areas of the portions of the external surface of said second elastic annular sealing element (B2) in contact respectively with said first and said second abutment surface (1S, 6S) are minimal in the absence of a fluid and increase when said second elastic annular sealing element (B2) is subjected to pressure exerted by a fluid inside said interspace (I),
said rotatable coupling further comprises a duct (CB) that extends from the interspace (I) to the external surface of the first hollow female element (61),
**wherein** the duct (CB) extends from a portion of the interspace (I) between the first and second elastic annular sealing element (B1, B2), and wherein each of said first and second annular sealing element (B1, B2) is hollow with open cross section and is provided with an opening or slit (F1) that places the inner space delimited by said first and second annular sealing element (B1, B2) in communication with the outside of said first and second annular sealing element (B1, B2), respectively, **wherein** each opening or slit (F1) is oriented toward said duct (CB),
**wherein** the opening or slit (F1) of the first elastic annular sealing element (B1) is oriented toward the opening or slit (F1) of the second elastic annular sealing element (B2), wherein said duct (CB) is open to the space outside of the coupling (60).

2. Coupling according to claim 1, **characterized in that** said first and said second abutment surface (1S, 6S) are in the shape of an annulus and substantially perpendicular to the longitudinal direction along which said second tubular male element (6) extends.

3. Coupling according to claim 1, **characterized in that** said first or second annular sealing element (B1, B2), in a sectional view, comprises two portions arranged so as to define or enclose an internal angle, said two portions being mutually connected by a connecting portion, and the external surfaces of each one of said two portions defining an angle being in contact, respectively, with said first abutment surface and said second abutment surface (1S, 6S).

4. Coupling according to claim 3, **characterized in that** each one of said two portions defining an angle comprises a rectilinear subportion extending from said connecting portion and a curved end portion, said two curved end portions being opposite each other so as to delimit said opening or slit (F1).

5. Coupling according to any of the claims from 1 to 4, **characterized in that** either said first female element (61) or said second male element (6) comprises a first and a second annular groove or lowered portion (S3, S4) extending from the corresponding abutment surface (1S, 6S), and **in that** said first annular sealing element (B1) is at least partially housed inside said first annular groove (S3), and said second annular sealing element (B2) is at least partially housed inside said second annular groove (S4).

6. Coupling according to claim 5, **characterized in that** said first annular groove (S3) and said second annular groove (S4) are in communication with the inner space mutually defined by said first hollow female element (61) and said second tubular male element (6) through said interspace (I).

7. Coupling according to claim 6, **characterized in that** said opening or slit (F1) of said first elastic annular sealing element (B1) is directed towards the inner space of said coupling (60) defined by said first hollow female element (61) and said second tubular male element (6).

8. Coupling according to any of claims 5 to 7, **characterized in that** said second annular groove (S4) is in communication with the outside of said coupling through said interspace (I).

9. Coupling according to claim 8, **characterized in that** said opening or slit (F1) of said second elastic annular sealing element (B2) is directed towards the outside of said coupling (60).

## Patentansprüche

1. Drehbare Kupplung (60) zur Verbindung von Rohren, wobei die besagte Kupplung ein erstes, hohles Aufsteckelement (61) umfasst, das dazu geeignet ist, beispielsweise mit einem ersten Abschnitt (51) eines Rohrs oder mit einer Rohrverschraubung (202) verbunden zu werden, sowie
ein zweites, röhrenförmiges Einsteckelement (6) umfasst mit einem ersten Endabschnitt, der wenigstens teilweise innerhalb des besagten ersten Aufsteckelements (61) aufgenommen ist, um einen gemeinsamen inneren Raum zu definieren, durch den eine Flüssigkeit fließen kann, und mit einem zweiten Endabschnitt, der dazu geeignet ist, mit einem zweiten Abschnitt (52) eines Rohrs verbunden zu werden,
wobei das besagte erste und das besagte zweite Element (61, 6) dazu geeignet sind, bezüglich einander gedreht zu werden und jeweils eine erste Anschlagfläche (1S) und eine zweite, neben der besagten ersten Anschlagfläche (1) liegende Anschlagfläche (6S) umfassen, **wobei** die besagte erste und die besagte zweite Anschlagfläche (1S, 6S) in einem vorbestimmten wechselseitigen Abstand voneinander positioniert sind, so dass ein Zwischenraum (I) definiert wird,
wobei zwischen der besagten ersten und der besagten zweiten Anschlagfläche (1S, 6S) wenigstens ein erstes elastisches, ringförmiges Dichtelement (B1) und ein zweites elastisches, ringförmiges Dichtelement (B2) eingefügt sind,
**wobei** die Oberflächenbereiche der Abschnitte der Außenfläche des besagten ersten elastischen, ringförmigen Dichtelements (B1), die sich jeweils mit der besagten ersten und mit der besagten zweiten Anschlagfläche (1S, 6S) in Kontakt befinden, minimal sind, wenn keine Flüssigkeit vorhanden ist, und zunehmen, wenn das besagte erste elastische, ringförmige Dichtelement (B1) Druck ausgesetzt wird, der durch eine in dem besagten Zwischenraum (I) vorhandene Flüssigkeit ausgeübt wird,
**wobei** die Oberflächenbereiche der Abschnitte der Außenfläche des besagten zweiten elastischen, ringförmigen Dichtelements (B2), die sich jeweils in Kontakt mit der besagten ersten und der besagten zweiten Anschlagfläche (1S, 6S) befinden, minimal sind, wenn keine Flüssigkeit vorhanden ist, und zunehmen, wenn das besagte zweite elastische, ringförmige Dichtelement (B2) Druck ausgesetzt wird, der durch eine in dem besagten Zwischenraum (I) vorhandene Flüssigkeit ausgeübt wird, wobei die besagte drehbare Kupplung des Weiteren eine Leitung (CB) umfasst, die sich von dem Zwischenraum (I) bis zu der Außenfläche des ersten hohlen Aufsteckelements (61) erstreckt,
**wobei** die Leitung (CB) sich von einem Abschnitt des Zwischenraums (I) zwischen dem ersten und dem zweiten elastischen, ringförmigen Dichtelement (B1, B2) erstreckt, und
wobei sowohl das besagte erste als auch das besagte zweite ringförmige Dichtelement (B1, B2) hohl mit offenem Querschnitt ist und mit einer Öffnung bzw. mit einem Schlitz (F1) versehen ist, die/der den durch das besagte erste und das besagte zweite elastische, ringförmige Dichtelement (B1, B2) begrenzten Innenraum mit dem Äußeren des besagten ersten bzw. zweiten elastischen Dichtelements (B1, B2) in Kommunikation versetzt,
**wobei** jede Öffnung bzw. jeder Schlitz (F1) zu der besagten Leitung (CB) gerichtet ist,
**wobei** die Öffnung bzw. der Schlitz (F1) des ersten elastischen, ringförmigen Dichtelements (B1) zu der Öffnung bzw. dem Schlitz (F1) des zweiten elastischen, ringförmigen Dichtelements (B2) gerichtet ist,
wobei die besagte Leitung (CB) zu dem Raum außerhalb der Kupplung (60) offen ist.

2. Kupplung nach Patentanspruch 1, **dadurch gekennzeichnet, dass** die besagte erste und die besagte zweite Anschlagfläche (1S, 6S) kreisringförmig und im Wesentlichen lotrecht zu der Längsrichtung sind, entlang der sich das besagte zweite, röhrenförmige Einsteckelement (6) erstreckt.

3. Kupplung nach Patentanspruch 1, **dadurch gekennzeichnet, dass** das besagte erste oder zweite ringförmige Dichtelement (B1, B2) in Schnittansicht zwei Abschnitte umfasst, die so angeordnet sind, dass sie einen Innenwinkel definieren oder umschließen, wobei die besagten zwei Abschnitte wechselseitig durch einen Verbindungsabschnitt verbunden sind, und die Außenflächen jedes der besagten zwei einen Winkel definierenden Abschnitte jeweils in Kontakt mit der besagten ersten Anschlagfläche und mit der besagten zweiten Anschlagfläche (1S, 6S) sind.

4. Kupplung nach Patentanspruch 3, **dadurch gekennzeichnet, dass** jeder der besagten zwei einen Winkel definierenden Abschnitte einen geradlinigen Unterabschnitt umfasst, der sich von dem besagten Verbindungsabschnitt erstreckt, sowie einen gekrümmten Endabschnitt umfasst, wobei die besagten zwei gekrümmten Endabschnitte einander entgegengesetzt sind, so dass sie die besagte Öffnung bzw. den besagten Schlitz (F1) begrenzen.

5. Kupplung nach einem jeglichen der Patentansprüche von 1 bis 4, **dadurch gekennzeichnet, dass** entweder das besagte erste Aufsteckelement (61) oder das besagte zweite Einsteckelement (6) eine erste und eine zweite ringförmige Rille oder einen ringförmigen abgesenkten Abschnitt (S3, S4) umfasst, die/der sich aus der entsprechenden Anschlagfläche (1S, 6S) erstreckt, und dadurch, dass das besagte erste ringförmige Dichtelement (B1) wenigstens teilweise innerhalb der besagten ersten ringförmigen Rille (S3) aufgenommen ist, und das besagte zweite ringförmige Dichtelement (B2) wenigstens teilweise innerhalb der besagten zweiten ringförmigen Rille (S4) aufgenommen ist.

6. Kupplung nach Patentanspruch 5, **dadurch gekennzeichnet, dass** die besagte erste ringförmige Rille (S3) und die besagte zweite ringförmige Rille (S4) durch den besagten Zwischenraum (I) mit dem Innenraum kommunizieren, der wechselseitig durch das besagte erste hohle Aufsteckelement (61) und das besagte zweite röhrenförmige Einsteckelement (6) definiert ist.

7. Kupplung nach Patentanspruch 6, **dadurch gekennzeichnet, dass** die besagte Öffnung bzw. der besagte Schlitz (F1) des besagten ersten elastischen, ringförmigen Dichtelements (B1) zu dem Innenraum der besagten Kupplung (60) gerichtet ist, der durch das besagte erste hohle Aufsteckelement (61) und das besagte zweite röhrenförmige Einsteckelement (6) definiert ist.

8. Kupplung nach einem jeden der Patentansprüche 5 bis 7, **dadurch gekennzeichnet, dass** die besagte zweite ringförmige Rille (S4) durch den besagten Zwischenraum (I) mit dem Äußeren der besagten Kupplung kommuniziert.

9. Kupplung nach Patentanspruch 8, **dadurch gekennzeichnet, dass** die besagte Öffnung bzw. der besagte Schlitz (F1) des besagten zweiten elastischen, ringförmigen Dichtelements (B2) zum Äußeren der besagten Kupplung (60) gerichtet ist.

## Revendications

1. Joint pivotant (60) pour la connexion de tuyaux, ledit joint comprenant un premier élément creux femelle (61) apte à être relié, par exemple, à une première portion (51) d'un tuyau ou à un raccord de tuyau (202) et un deuxième élément tubulaire mâle (6) avec une première porion d'extrémité logée au moins partiellement à l'intérieur dudit premier élément femelle (61) de manière à définir un espace intérieur commun pour le passage d'un fluide, et une deuxième portion d'extrémité apte à être reliée à une deuxième portion (52) d'un tuyau,
ledit premier élément et ledit deuxième élément (61, 6) étant indiqués pour être tournés l'un par rapport à l'autre et comprenant respectivement une première surface de butée (1S) et une deuxième surface de butée (6S) adjacente à ladite première surface de butée (1S), **où** ladite première surface de butée et ladite deuxième surface de butée (1S, 6S) sont disposées à une distance réciproque prédéfinie de manière à définir un interstice (I),
au moins un premier élément d'étanchéité élastique annulaire (B1) et un deuxième élément d'étanchéité élastique annulaire (B2) étant interposé entre ladite première surface de butée et ladite deuxième surface de butée (1S, 6S),
**où** les surfaces des portions de la surface extérieure dudit premier élément d'étanchéité élastique annulaire (B1), en contact respectivement avec ladite première surface de butée et ladite deuxième surface de butée (1S, 6S), sont minimales en l'absence d'un fluide et augmentent quand ledit premier élément d'étanchéité élastique annulaire (B1) est soumis à une pression exercée par un fluide à l'intérieur dudit interstice (I),
**où** les surfaces des portions de la surface extérieure dudit deuxième élément d'étanchéité élastique annulaire (B2), en contact respectivement avec ladite première surface de butée et ladite deuxième surface de butée (1S, 6S), sont minimales en l'absence d'un fluide et augmentent quand ledit deuxième élément d'étanchéité élastique annulaire (B2) est soumis à une pression exercée par un fluide à l'intérieur dudit interstice (I),
ledit joint pivotant comprend en outre un conduit (CB) qui s'étend dudit interstice (I) à la surface extérieure dudit premier élément femelle creux (61), **où** le conduit (CB) s'étend d'une portion de l'interstice (I) entre ledit premier et ledit deuxième éléments d'étanchéité élastiques annulaires (B1, B2), et **où**
chacun desdits premier et deuxième éléments d'étanchéité annulaires (B1, B2) est creux à section transversale ouverte et est pourvu d'une ouverture ou fente (F1) qui met en communication l'espace intérieur délimité par ledit premier et ledit deuxième éléments d'étanchéité annulaires (B1, B2) avec l'extérieur desdits premier et deuxième éléments d'étanchéité annulaires (B1, B2), respectivement,
**où** chaque ouverture ou fente (F1) est orientée vers ledit conduit (CB),
**où** l'ouverture ou fente (F1) du premier élément d'étanchéité élastique annulaire (B1) est orientée vers l'ouverture ou fente (F1) du deuxième élément d'étanchéité élastique annulaire (B2),
**où** ledit conduit (CB) est ouvert vers l'espace à l'extérieur du joint (60).

2. Joint selon la revendication 1, **caractérisé en ce que** ladite première surface de butée et ladite deuxième surface de butée (1S, 6S) présentent la forme d'une couronne circulaire et sont essentiellement perpendiculaires à la direction longitudinale le long de laquelle ledit deuxième élément tubulaire mâle (6) s'étend.

3. Joint selon la revendication 1, **caractérisé en ce que** ledit premier ou ledit deuxième élément d'étanchéité annulaire (B1, B2), selon une vue en section transversale, comprend deux portions disposées de manière à définir ou à renfermer un angle intérieur, lesdites deux portions étant reliées réciproquement par une portion de raccordement, et les surfaces extérieures de chacune desdites deux portions définissant un angle étant en contact, respectivement, avec ladite première surface de butée et ladite deuxième surface de butée (1S, 6S).

4. Joint selon la revendication 3, **caractérisé en ce que** chacune desdites deux portions définissant un angle comprend une sous-portion rectiligne qui s'étend de ladite portion de raccordement et une portion d'extrémité courbe, lesdites deux portions d'extrémité courbes étant opposées l'une par rapport à l'autre de manière à délimiter ladite ouverture ou fente (F1).

5. Joint selon l'une quelconque des revendications de 1 à 4, **caractérisé en ce que** ledit premier élément femelle (61) ou ledit deuxième élément mâle (6) comprend une première et une deuxième cannelure ou partie abaissée annulaire (S3, S4) qui s'étend de la surface de butée respective (1S, 6S), **et en ce que** ledit premier élément d'étanchéité annulaire (B1) est logé au moins partiellement à l'intérieur de ladite première cannelure annulaire (S3) et ledit deuxième élément annulaire d'étanchéité (B2) est logé au moins partiellement à l'intérieur de ladite deuxième cannelure annulaire (S4).

6. Joint selon la revendication 5, **caractérisé en ce que** ladite première cannelure annulaire (S3) et ladite deuxième cannelure annulaire (S4) sont en communication avec l'espace intérieur défini réciproquement par ledit premier élément creux femelle (61) et ledit deuxième élément tubulaire mâle (6) à travers ledit interstice (I).

7. Joint selon la revendication 6, **caractérisé en ce que** ladite ouverture ou fente (F1) dudit premier élément d'étanchéité élastique annulaire (B1) est tournée vers l'espace intérieur dudit joint (60) défini par ledit premier élément creux femelle (61) et par ledit deuxième élément tubulaire mâle (6).

8. Joint selon l'une quelconque des revendications de 5 à 7, **caractérisé en ce que** ladite deuxième cannelure annulaire (S4) est en communication avec l'espace à l'extérieur dudit joint à travers ledit interstice (I).

9. Joint selon la revendication 8, **caractérisé en ce que** ladite ouverture ou fente (F1) dudit deuxième élément d'étanchéité élastique annulaire (B2) est tournée vers l'espace à l'extérieur dudit joint (60).
